# EUROPÄISCHE PATENTSCHRIFT

(11) **EP 1 821 380 B1**
(45) Veröffentlichungstag und Bekanntmachung des Hinweises auf die Patenterteilung: **29.08.2007**
(21) Anmeldenummer: 06290288.7
(22) Anmeldetag: 16.02.2006
(51) Int. Cl.: H02G 15/34, H01R 4/68

(54) **Verfahren zum Verlegen eines Supraleiterkabels**
Process for laying a superconducting cable
Procédé de pose d'un câble supraconducteur

(43) Veröffentlichungstag der Anmeldung: 22.08.2007
(73) Patentinhaber: Nexans, 75008 Paris (FR)
(72) Erfinder: Allais, Arnaud, 30625 Hannover (DE); Soika, Rainer, 30163 Hannover (DE)
(74) Vertreter: Döring, Roger

(56) Entgegenhaltungen:
- EP-A- 1 489 692
- EP-A- 1 617 537

## Beschreibung

Die Erfindung betrifft ein Verfahren zur Verlegung eines Supraleiterkabels nach dem Oberbegriff des Anspruchs 1.

Supraleiterkabel kontrahieren, wenn sie auf Betriebstemperatur abgekühlt werden und expandieren, wenn sie erwärmt werden, z. B. im Falle eines Fehlers. In einer solchen Situation bewegen sich insbesondere die Endbereiche des Supraleiterkabels in Längsrichtung des Kabels. Die Größenordnung der Längenänderung beträgt - 0.3 %. Die Endbereiche des Supraleiterkabels sind an normale Leiter angeschlossen, dessen anderes Ende an den Leiter einer sogenannten Durchführung angeschlossen ist. Über die Durchführung ist das Supraleiterkabel an ein Stromnetz angeschlossen.

Gerade bei großen Kabellängen bereitet die Beherrschung der Kontraktionen und Expansionen an den Enden der Kabel erhebliche Probleme.

Aus der EP 1 489 692 ist es bekannt, das Ende des Supraleiterkabels mit dem Endenabschluß über ein Kupferseil zu verbinden. Dadurch werden Kontraktionen und Expansionen an den Kabelenden absorbiert und es treten keine Kräfte auf den ortsfest gelagerten Endenabschluß auf. Nachteilig bei dieser Lösung ist, daß im Falle der Expansion des Supraleiterkabels gerade bei großen Kabellängen eine Führung des unter Hochspannung stehenden Seils sehr aufwendig ist und befürchtet werden muß, daß das Seil in Kontakt mit dem die Verbindungsstelle zwischen dem Supraleiterkabel und dem Endenabschluß umgebenden Gehäuse gelangt.

Die EP 1 617 537 A2 offenbart einen Endenabschluß für ein supraleitendes Kabel, bei dem der Stromleiter des Endenabschlusses mit dem supraleitfähigen Leiter des Kabels über ein rohrförmiges Bauteil aus elektrisch leitfähigem Werkstoff elektrisch verbunden ist. Bei dieser Lösung kann der Leiter in dem Bauteil gleiten.

Bei einer weiteren Lösung des Problems, welche in der älteren EP-Anmeldung 0 529 092.4 der Anmelderin beschrieben ist, wird eine Expansion oder Kontraktion des Supraleiterkabels unterbunden. Die in einem Kryostaten verlegte supraleitende Kabelseele verläuft innerhalb des Kryostaten in Form einer Welle oder Wendel, wenn die Kabelseele auf Raumtemperatur ist. Dies wird dadurch bewerkstelligt, daß ein kreuzartiges Netzwerk aus einem Material mit einem niedrigen thermischen Ausdehnungskoeffizienten an bestimmten Punkten in längsaxialen Abständen an der Kabelseele befestigt ist. Bei Betriebstemperatur verläuft die Kabelseele nahezu parallel zum Kryostaten, wogegen sie bei Raumtemperatur wellen- oder wendelförmig verläuft. Eine Bewegung der Enden der Kabelseele in längsaxialer Richtung ist durch das Netzwerk unterbunden.

Der Erfindung liegt die Aufgabe zugrunde, ein Verfahren zur Verlegung eines Supraleiterkabels anzugeben, bei welchem die Kontraktionen und Expansionen der supraleitfähigen Kabelseele in besonders einfacher Weise beherrschbar sind.

Diese Aufgabe wird durch die im Kennzeichen des Anspruchs 1 sowie des Anspruchs 2 gelöst.

Durch die Festlegung der Enden der supraleitfähigen Kabelseele nach dem Abkühlen auf Betriebstemperatur wird bei einer Wiedererwärmung im Falle des Abschaltens des Kabels oder im Falle des Auftretens eines Fehlers die Kabelseele sich innerhalb des Kryostaten wellenförmig oder wendelförmig legen.

Nach einer besonders vorteilhaften Ausgestaltung der Erfindung sind die Enden der Kabelseele lösbar mit den Endenabschlüssen verbunden. Der hieraus entstehende Vorteil ist darin zu sehen, daß vor dem Abschalten bzw. im Falle eines Fehlers die Verbindungen zwischen den Enden der Kabelseele und den Endenabschlüssen gelöst werden können, so daß sich die Kabelseele ungehindert ausdehnen kann.

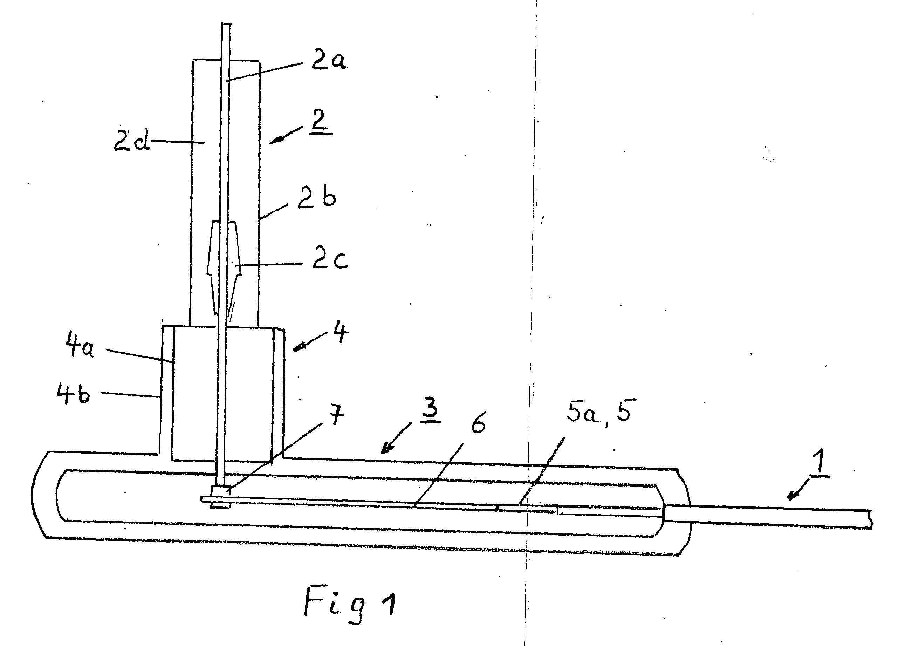

Die Erfindung ist anhand der in den Figuren 1 bis 4 schematisch dargestellten Ausführungsbeispiele näher erläutert.

Die Figur 1 zeigt einen Endenabschluß für ein Supraleiterkabel, wie er aus der EP 1 617 537 bekannt ist.

Das Supraleiterkabel 1 besteht wie an sich bekannt aus einer supraleitfähigen Kabelseele sowie einem die Kabelseele umgebenden Kryostaten.

Der Endenabschluß 2 besteht aus einem Stromleiter 2a, einem den Stromleiter 2a umgebenden Isolator 2b sowie einem Feldsteuerelement 2c. Der Innenraum 2d des Isolators 2b ist üblicherweise mit Isolieröl gefüllt.

Mit 3 ist ein das Kabelende und die Verbindungsstelle zwischen dem Leiter 5 des Supraleiterkabels 1 und dem Stromleiter 2a umgebendes Gehäuse bezeichnet, in welchem ein Vakuum vorherrscht. Auf dem Gehäuse 3 sitzt ein Rohrstutzen 4, welcher den Stromleiter 2a konzentrisch umgibt. Der Rohrstutzen 4 ist zweischalig ausgebildet, wobei der Raum zwischen den beiden Schalen 4a und 4b mit einer Superisolierung ausgefüllt und evakuiert ist. Der zwischen dem Stromleiter 2a und der inneren Schale 4a befindliche Raum ist mit einem lsolierwerkstoff, vorzugsweise einem Schaumstoff ausgefüllt.

Das von der nicht näher bezeichneten Isolierschicht befreite Ende 5a des supraleitfähigen Leiters 5, welcher aus einem zentralen Element, z. B. einem verdichteten Seil aus Kupferdrähten und mehreren auf das zentrale Element aufgewickelten Bändern aus supraleitfähigem Material besteht, ist mit einem Bolzen oder Rohr 6 aus Kupfer verbunden. Die Enden der einzelnen supraleitfähigen Bänder sind elektrisch leitend mit der Oberfläche des Bolzens oder Rohres 6 verbunden. Über ein Bauteil 7 ist der Bolzen oder das Rohr 6 elektrisch leitend an den Stromleiter 2a angeschlossen. Um die durch Expansion bzw. Kontraktion der Kabelseele des Supraleiterkabels 1 auftretenden Kräfte zu absorbieren, ist hier vorgesehen, das Rohr bzw. den Bolzen 6 in dem Bauteil 7 längsverschieblich anzuordnen.

Durch die Erfindung soll ein anderer Weg beschritten werden.

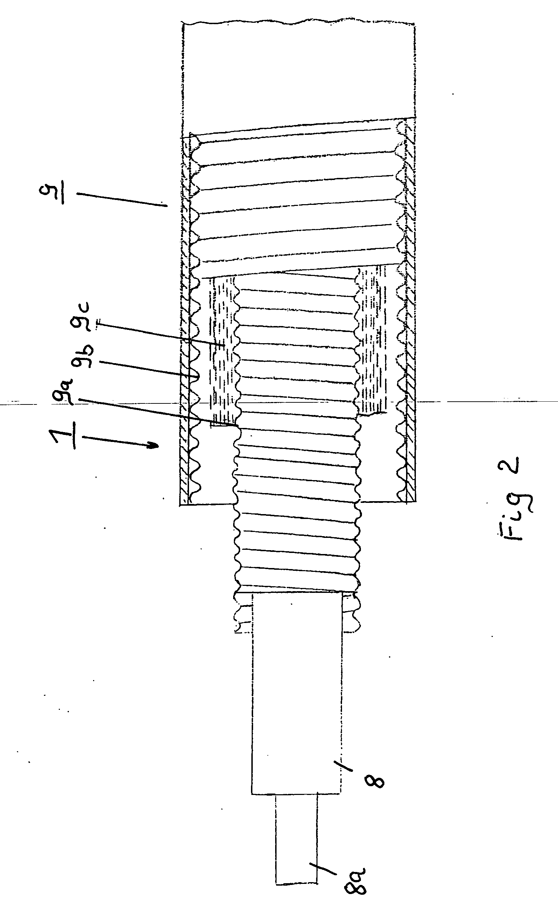

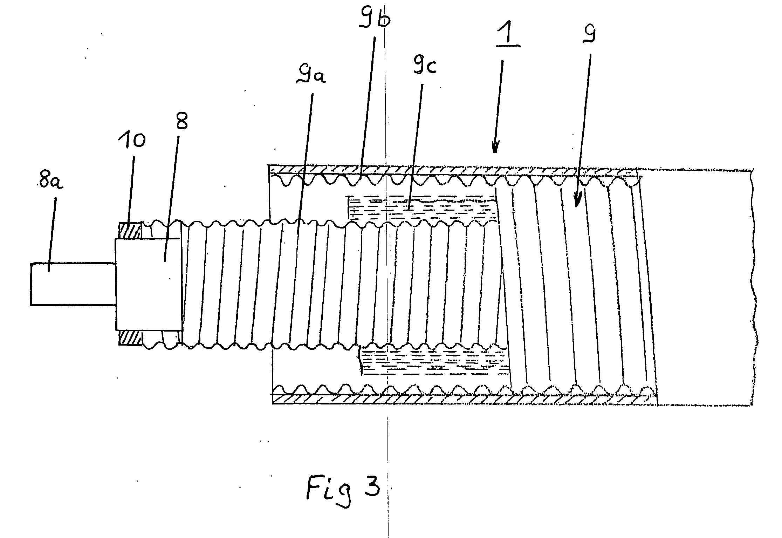

Wie aus den Figuren 2 und 3 ersichtlich ist die Kabelseele 8 in einem Kryostaten 9 frei beweglich angeordnet. Der Kryostat besteht aus zumindest zwei konzentrisch zueinander angeordneten gewellten Metallrohren 9a und 9b, zwischen denen eine Isolierschicht 9c aus metallbedampften Kunststofffolien angeordnet ist.

In der Figur 2 ist ein Ende des Supraleiterkabels 1 gezeigt, wobei sich das Supraleiterkabel 1 bei Umgebungstemperatur befindet. Die Kabelseele 8 weist eine größere Länge als der Kryostat 9 auf, d. h., die Enden ragen aus dem Kryostaten 9 heraus.

Nach dem Verlegen des Supraleiterkabels 1 wird die Kabelseele 8 auf Betriebstemperatur abgekühlt, indem ein Kühlmittel durch den Ringspalt zwischen der Kabelseele 8 und dem inneren Wellrohr 9a hindurchgeleitet wird. Als Kühlmittel wird gängigerweise flüssiger Stickstoff mit einer Temperatur der Größenordnung 70 K verwendet.

Infolge der Abkühlung kontrahiert die Kabelseele 8 und zieht sich dabei in das Innere des Kryostaten 1 zurück. Der abgekühlte Zustand ist in Figur 3 dargestellt. Die Kabelseele 8 wird nun gegenüber dem Kryostaten an beiden Enden fixiert. Als eines von vielen Möglichkeiten wird ein Metallring 10 sowohl mit der Oberfläche der Kabelseele 8 als auch mit dem Wellrohr 9a des Kryostaten 9 mechanisch fest verbunden.

Abschließend wird an den Leiter 8a der Endenabschluß montiert. Muß das Supraleiterkabel 1 nun beispielsweise durch einen Fehler vom Netz genommen werden, und erwärmt sich infolge dessen die Kabelseele 8, dehnt sich diese aus. Da sie an beiden Enden gegenüber dem Kryostaten 1 fixiert ist, verformt sich die Kabelseele 8 und legt sich in Form einer Welle oder einer Wendel im Innern des Kryostaten. Da die gesamte Längenänderung des Kabels im Kryostaten kompensiert wird, ist die Längenänderung, die auf das im Gehäuse 3 sitzende Ende 5a des supraleitfähigen Leiters 5 sowie der damit verbundene Innenleiter 2a wirkt, vernachlässigbar.

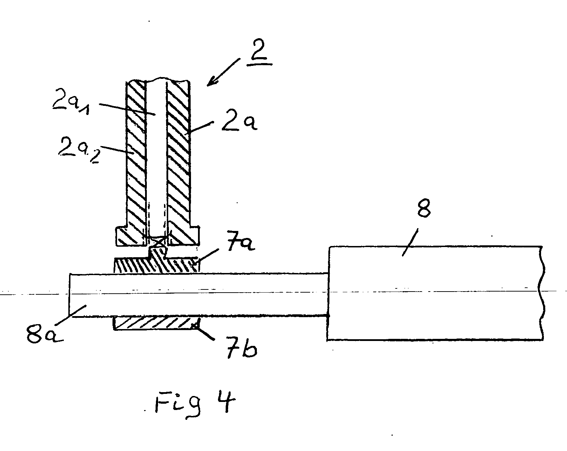

In der Figur 4 ist eine weitere Ausführung der Erfindung schematisch dargestellt.

Auch bei diesem Ausführungsbeispiel wird die Verbindung zwischen dem Leiter 8a der Kabelseele 8 und dem Leiter 2a des Endenabschlusses 2 nach dem Abkühlen der Kabelseele auf Betriebstemperatur hergestellt.

Der Leiter 2a weist ein inneres Teil 2a₁ und ein äußeres Teil 2a₂ auf. Das innere Teil 2ₐ₁ ist längsverschiebbar in dem äußeren Teil 2a₂ angeordnet. Mittels eines nicht näher bezeichneten Gewindes an der inneren Oberfläche des äußeren Teils 2a₂ und eines Gewindes an der äußeren Oberfläche des inneren Teils 2ₐ₁ kann das innere Teil 2ₐ₁ in Längsrichtung des Leiters 2a bewegt werden, wenn das innere Teil 2ₐ₁ gedreht wird.

An seinem dem Leiter 8a der Kabelseele 8 zugekehrten Ende ist das innere Teil 2ₐ₁ drehbar mit einer Halbschale 7a verbunden, welche gemeinsam mit einer Halbschale 7b den Leiter 8a der Kabelseele 8 umschließt, wenn das Supraleiterkabel 1 in Betrieb ist. Nach dem Abkühlen der Kabelseele 8 wird die Halbschale 7a durch Drehen des Teils 2a₁ auf den Leiter 8a zu bewegt und umschließt diesen gemeinsam mit der Halbschale 7b und stellt auf diese Weise eine elektrisch leitende Verbindung her.

Wenn das Supraleiterkabel vom Netz genommen wird, und die Kabelseele sich erwärmt und dabei ausdehnt, wird die elektrische Verbindung durch Fortbewegen der Halbschale 7a gelöst und der Leiter 8 kann sich frei zwischen den Halbschalen 7a und 7b bewegen.

Der Vorteil dieser Konfiguration ist, daß sich das Kabel beim Abkühlen und Erwärmen frei zusammenziehen beziehungsweise ausdehnen kann. Es wirken insbesondere keine durch die Längenänderung hervorgerufenen Kräfte transvers auf den Innenleiter 2a des Endenabschlusses 2.

## Patentansprüche

1. Verfahren zum Verlegen eines Supraleiterkabels (1), welches aus einer supraleitfähigen Kabelseele (8) und einem die supraleitfähige Kabelseele (8) umgebenden Kryostaten (9) besteht, wobei die supraleitfähige Kabelseele (8) frei beweglich in dem Kryostaten (9) angeordnet ist, **dadurch gekennzeichnet, daß** nach dem Verlegen des Supraleiterkabels (1) die supraleitfähige Kabelseele (8) auf die Betriebstemperatur abgekühlt wird, wobei sich die supraleitfähige Kabelseele (8) gegenüber dem Kryostaten (9) verkürzt, daß die supraleitfähige Kabelseele (8) an ihren Enden fixiert wird und daß darauf an den Enden der Kabelseele (8) Endenabschlüsse (2) montiert werden.

2. Verfahren zum Verlegen eines Supraleiterkabels (1), welches aus einer supraleitfähigen Kabelseele (8) und einem die supraleitfähige Kabelseele (8) umgebenden Kryostaten (9) besteht, wobei die supraleitfähige Kabelseele (8) frei beweglich in dem Kryostaten (9) angeordnet ist, **dadurch gekennzeichnet, daß** nach dem Verlegen des Supraleiterkabels (1) die supraleitfähige Kabelseele (8) auf die Betriebstemperatur abgekühlt wird, wobei sich die supraleitfähige Kabelseele (8) gegenüber dem Kryostaten (9) verkürzt, und daß die Enden der Kabelseele (8) bzw. der Leiter (8a) mit ortsfest gelagerten Endenabschlüssen (2) verbunden werden.

3. Verfahren nach Anspruch 1, **dadurch gekennzeichnet, daß** die supraleitfähige Kabelseele (8) im Bereich ihrer beiden Enden mit den Enden des Kryostaten (9) mechanisch fest verbunden werden.

4. Verfahren nach Anspruch 2, **dadurch gekennzeichnet, daß** die Enden der supraleitfähigen Kabelseele (8) bzw. der Leiter (8a) lösbar mit den ortsfest gelagerten Endenabschlüssen (2) verbunden werden.

5. Verfahren nach einem der Ansprüche 1 bis 4, **dadurch gekennzeichnet, daß** die Kabelseele (8) in einem aus mehreren konzentrischen und im Abstand zueinander angeordneten gewellten Metallrohren (9a,9b) bestehenden Kryostaten (9) angeordnet wird.

## Claims

1. A method for laying a superconductor cable (1) which consists of a superconductive cable core (8) and a cryostat (9) enclosing the superconductive cable core (8), the superconductive cable core (8) being arranged freely mobile in the cryostat (9), **characterized in that** the superconductive cable core (8) is cooled to the operating temperature after laying the superconductor cable (1), the superconductive cable core (8) being shortened relative to the cryostat (9), **in that** the superconductive cable core (8) is fixed at its ends and **in that** terminations (2) are thereupon mounted on the ends of the cable core (8).

2. A method for laying a superconductor cable (1) which consists of a superconductive cable core (8) and a cryostat (9) enclosing the superconductive cable core (8), the superconductive cable core (8) being arranged freely mobile in the cryostat (9), **characterized in that** the superconductive cable core (8) is cooled to the operating temperature after laying the superconductor cable (1), the superconductive cable core (8) being shortened relative to the cryostat (9), and **in that** the ends of the cable core (8) or of the conductors (8a) are connected to statically placed terminations (2).

3. Method according to Claim 1, **characterized in that** the superconductive cable core (8) is mechanically connected firmly in the region of its two ends to the ends of the cryostat (9).

4. Method according to Claim 2, **characterized in that** the ends of the superconductive cable core (8) or of the conductors (8a) are releasably connected to the statically placed terminations (2).

5. Method according to one of Claims 1 to 4, **characterized in that** the cable core (8) is arranged in a cryostat (9) consisting of a plurality of corrugated metal tubes (9a, 9b) arranged concentrically and at a distance from one another.

## Revendications

1. Procédé de pose d'un câble supraconducteur (1) consistant en une âme de câble (8) supraconductrice et en un cryostat (9) entourant l'âme du câble (8) supraconductrice, l'âme du câble (8) supraconductrice étant disposée de façon librement mobile dans le cryostat (9), **caractérisé en ce que**, après la pose du câble supraconducteur (1), on refroidit l'âme du câble (8) supraconductrice à la température de service, l'âme du câble (8) supraconductrice se raccourcissant par rapport au cryostat (9), **en ce qu'**on fixe l'âme du câble (8) supraconductrice sur ses extrémités et **en ce qu'**on monte sur cette dernière des terminaisons d'extrémité (2) sur les extrémités de l'âme du câble (8).

2. Procédé de pose d'un câble supraconducteur (1) consistant en une âme de câble (8) supraconductrice et en un cryostat (9) entourant l'âme du câble (8) supraconductrice, l'âme du câble (8) supraconductrice étant disposée de façon librement mobile dans le cryostat (9), **caractérisé en ce que**, après la pose du câble supraconducteur (1), on refroidit l'âme du câble (8) supraconductrice à la température de service, l'âme du câble (8) supraconductrice se raccourcissant par rapport au cryostat (9), **en ce qu'**on relie les extrémités de l'âme du câble (8) supraconductrice ou des conducteurs (8a) avec des terminaisons d'extrémité (2) logées de façon stationnaire.

3. Procédé selon la revendication 1, **caractérisé en ce qu'**on relie fixement par liaison mécanique l'âme de câble (8) supraconductrice dans la région de ses deux extrémités avec les extrémités du cryostat (9).

4. Procédé selon la revendication 2, **caractérisé en ce qu'**on relie les extrémités de l'âme de câble (8) supraconductrice ou des conducteurs (8a) de façon amovible avec les terminaisons d'extrémité (2) logées de façon stationnaire.

5. Procédé selon l'une quelconque des revendications 1 à 4, **caractérisé en ce qu'**on dispose l'âme du câble (8) dans un cryostat (9) consistant en plusieurs tubes métalliques (9a, 9b) ondulés, disposés de façon concentrique et à distance mutuelle.
